# EUROPÄISCHE PATENTANMELDUNG

(11) **EP 0 980 126 A1**
(43) Veröffentlichungstag der Anmeldung: **16.02.2000**
(21) Anmeldenummer: 99114324.9
(22) Anmeldetag: 21.07.1999
(51) Int. Cl.: H02B 1/30

(54) **Aus Metall hergestelltes, kastenförmiges Profil sowie Verfahren zu seiner Herstellung**

(30) Priorität: 12.08.1998 DE 19836510; 28.05.1999 DE 19924594
(71) Anmelder: ABB PATENT GmbH, 68309 Mannheim (DE)
(72) Erfinder: Wittnebel, Dieter, 69168 Schriesheim (DE); Fischer, Dieter, 69469 Weinheim (DE)
(74) Vertreter: Miller, Toivo

(57) **Zusammenfassung**

Ein aus Metall herzustellendes kastenartiges Profil, welches mit weiteren Profilen zu einem Schrank, insbesondere zu einem Schaltschrank ergänzbar ist, umfaßt zunächst einen langgestreckt rechteckigen Basisabschnitt (10 B), an dessen beiden Schmalkanten in entgegengesetzter Richtung je drei Laschen (13, 17, 15; 14, 18, 16) angeformt sind, die durch je einen Schlitz 19, 21; 20, 22 voneinander getrennt sind. Die Breite der beiden äußeren, ersten Laschen (13, 14; 15, 16) ist jeweils halb so groß wie die der zweiten, inneren Lasche, wobei jede erste im Umfang ein Quadrat bildet. Der Abstand der beiden entgegengesetzt vorspringenden ersten Laschen (13, 14) von der benachbarten Längskante (23) entspricht etwa der Breite der ersten Lasche (13, 14). Zur Bildung des Profils werden die Laschen (13 bis 18) senkrecht zum Basisabschnitt (10 B) hochgebogen und der Basisabschnitt in der durch miteinander fluchtende Schlitze (19, 21; 20, 22) definierten Linie (37, 30) je um neunzig Grad abgekantet. Schlußendlich wird der zwischen der freien Kante der ersten Laschen 13, 14 und der Längskante (23) und außerhalb des Laschenbereichs befindliche Basisabschnittsbereich parallel zum Basisabschnitt hochgebogen.

## Beschreibung

Die Erfindung betrifft ein aus Metall hergestelltes, kastenförmiges Profil gemäß dem Oberbegriff des Anspruches 1 und ein Verfahren zur Herstellung des Profils.

Derartige Profile besitzen eine hohe Festigkeit insbesondere gegen Biegung und Torsion, so daß solche Profile bei der Herstellung von Schaltschränken, Gerüsten für Schaltschränke und dergleichen verwendet werden.

Häufig wird als Profil ein C- förmig gestanztes oder extrudiertes Profil verwendet, das eine bestimmte Anzahl von Löchern in bestimmtem Abstand aufweist, an denen weitere Teile befestigt werden können. Dort, wo zum Beispiel drei Profile jeweils im rechten Winkel miteinander zu verbinden sind, werden besondere Eckverbinder benutzt, an denen die Profile angeschlossen sind.

Aufgabe der Erfindung ist es, ein Profil zur Herstellung eines Schaltschrankes zu schaffen, welches einfach hergestellt und mit weiteren, zum Beispiel C-förmigen Profilen ohne Zwischenfügung eines Eckverbinders zusammengeschlossen werden kann, sowie ein Verfahren zur Herstellung dieses Profiles anzugeben.

Diese Aufgabe wird gelöst durch die Merkmale des Anspruches 1.

Danach ist für das kastenförmige Profil ein langgestreckter rechteckiger Basisabschnitt vorgesehen, an dessen beiden Schmalkanten je drei in entgegengesetzte Richtung vorspringende Laschen angeformt sind, die je durch einen Schlitz von einander getrennt sind. Die Breite der beiden äußeren ersten Laschen ist jeweils halb so groß wie die der zweiten, inneren Lasche und jede erste Lasche besitzt die Umfangsform eines Quadrates. Der Abstand jeweils einer ersten Lasche von der benachbarten Längskante entspricht etwa der Breite der ersten Lasche. Zur Bildung des Profils werden die Laschen senkrecht zum Basisabschnitt hochgebogen; der Basisabschnitt wird in der durch miteinander fluchtende Schlitze definierten Linie je um neunzig Grad abgekantet, danach der außerhalb des Laschenbereiches befindliche Basisabschnittsbereich schlußendlich paralell zum Basisbereich zurückgebogen und die zweiten Laschen hochgebogen und mit den ersten Laschen fest verbunden.

Dadurch wird ein Profil, das im wesentlichen als Querträger zwischen vertikalen Profilen eines Schallschrankes angeordnet und verwendet werden soll, auf einfache Weise lediglich durch Ausstanzen und Abkanten hergestellt.

Eine weitere Verbesserung und Vereinfachung der Erfindung kann dahingehen, daß zwei Basisabschnitte nebeneinander gestanzt sind, die mittels abbrechbarer Stege miteinander verbunden sind.

Dadurch wird eine Grundplatte aus zwei Plattenabschnitten hergestellt, die mit dem abbrechbaren Stegen miteinander verbunden sind; nach Abkantung der beiden Basisabschnitte werden die teilweise fertig abgekanteten Profile durch Abbrechen der Stege voneinander getrennt und die einzelnen Profile fertig weiterbearbeitet.

Gemäß einer weiteren vorteilhaften Ausgestaltung der Erfindung besitzen die Laschen wenigstens zwei vorspringende Noppen, die in entsprechende Vertiefungen oder Löcher an den senkrecht verlaufenden Profilstreben anschließen und darin gegen Verdrehung formschlüssig festgehalten sind. In einer besonders vorteilhaften Ausgestaltung sind vier im Quadrat angeordnete Noppen vorgesehen.

Das Verfahren zur Herstellung des erfindungsgemäßen Profiles läuft in besonders vorteilhafter Weise ab wie im Patentanspruch 5 angegeben.

Anhand der Zeichnung, in der ein Ausführungsbeispiel der Erfindung dargestellt ist, sollen die Erfindung so wie weitere vorteilhafte Ausgestaltungen und Verbesserungen der Erfindung näher erläutert und beschrieben werden.

Es zeigen:
- Fig. 1: ein perspektivische Ansicht zweier nebeneinander liegender Profile, vor dem Auseinanderbrechen,
- Fig. 2: eine Aufsicht auf ein gestanztes Blechteil, aus dem ein Profil hergestellt werden kann,
- Fig 3: eine Aufsicht auf einen Teilabschnitt eines fertig abgekanteten Profils, und
- Fig. 4: eine Aufsicht auf den Teilabschnitt gemäß Fig. 3, in modifizierter Ausgestaltung.

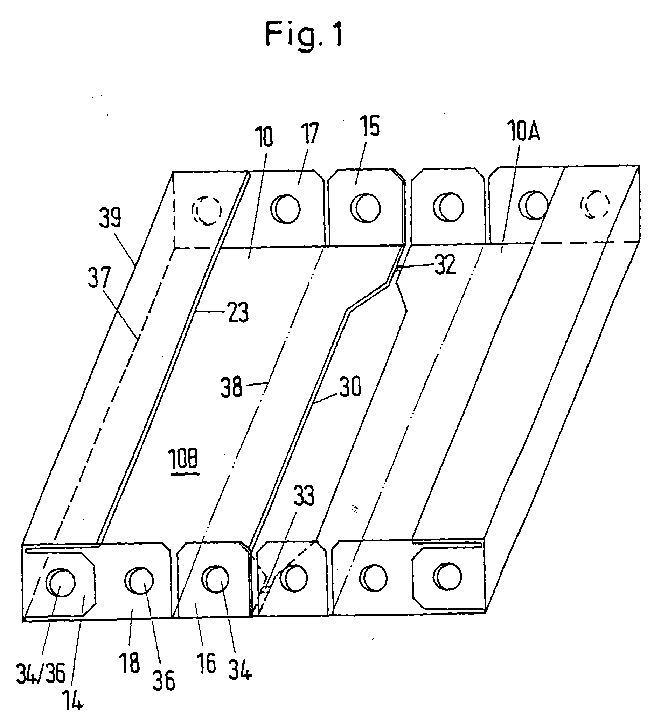

Die Figur 1 zeigt in perspektivischer Ansicht zwei nebeneinander liegende Blechteile 10, 10A, die mit Stegen 32, 33 miteinander verbunden sind, also vor demjenigen Bearbeitungsabschnitt, an dem die Stege 32, 33 abgebrochen werden. Man erkennt daraus, daß die beiden Blechteile 10, 10A als Rohlinge zur Herstellung der Profile soweit abgekantet und bearbeitet sind, bis der Bereich zwischen der Abkantlinie 39 und der Schmalkante 23 paralell zum Basisabschnitt 10B verläuft. Nach dem Trennen der beiden Teile 10, 10A wird der Basisabschnitt 10B an der Kante 38 abgekantet, so daß die Laschen 15, 16 über die Laschen 17, 18 zu liegen kommen, so daß die Löcher 34 mit den Löchern 36 fluchten. Aus Vereinfachungsgründen sind die Noppen 35 nicht dargestellt.

Der Weg hierzu ist wie folgt:

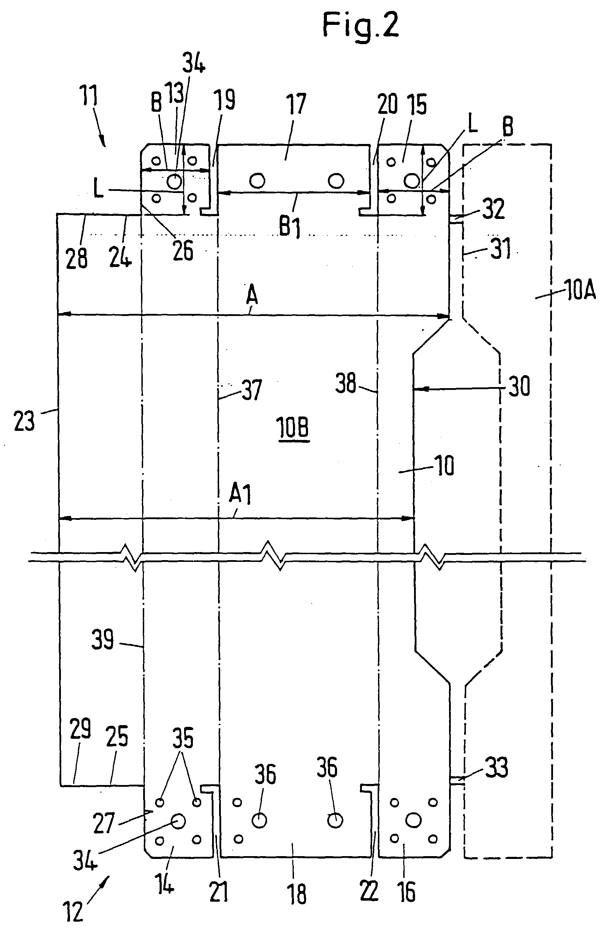

Die Figur 2 zeigt eine Aufsicht auf ein auch als Basisteil oder -abschnitt 10 bezeichnetes gestanztes Blechteil 10, an dessen Schmalseitenkanten 11 und 12 in entgegengesetzter Richtung vorspringende erste Laschen 13, 14; 15, 16, angeformt sind, wobei jeweils zwei erste Laschen an jeder Schmalkante 11, 12 angebracht sind; die beiden ersten Laschen 13, 15; 14, 16 nehmen je eine zweite Lasche 17, 18 zwischen sich, die von den ersten Laschen 13, 15; 14, 16 mittels Schlitzen 19, 20, 21, 22 getrennt sind. Die ersten Laschen 16 bis 16 sind in ihrer Form quadratisch, so daß die vorspringende Länge L etwa der Breite B entspricht. Die Breite B₁ der dazwischen befindlichen zweiten Laschen 17, 18 entspricht dem doppelten der einfachen Breite B der Laschen 13, 15; 14, 16.

Zwischen der einen Schmalseitenkante 23 und den ersten Laschen 13, 14 ist je eine Stufung 24, 25 vorgesehen, mit der eine quadratförmig gestaltete Aussparung erzeugt wird, die im Umfang, d. h. bei weggedachter Stufung 24, 25, der Form den Laschen 13, 14; 15, 16 entspricht. Die Kanten 26, 27 der der Längskante 23 benachbarten Laschen 13, 14 sind von der Längskante 23 den Betrag B entfernt; ebenso ist die senkrecht zur Längskante 23 verlaufende Kante 28, 29 jeder Stufung von dem freien Ende der Laschen 13, 14 um den Betrag L entfernt.

An der freien Kante der Laschen 15, 16 schließt sich eine Verengung 30 an, dergestalt, daß der Abstand A₁ der Verengung 30 von der gegenüberliegenden Längskante 23 geringer ist als der Abstand A der mit der anderen Längskante 31 fluchtenden freien Kante der Lasche 15; 16 von der selben Längskante 23.

Über die oben erwähnten Stege 32 und 33 ist ein strichliert dargestelltes und spiegelbildlich zum Basisabschnitt oder -teil 10 ein weiteres, auch als weiteres Basisteil 10A bezeichnetes ausgestanztes Blechteil 10A am Basisabschnitt oder -teil 10 befestigt, das den gleichen Umfang besitzt wie das Blechteil 10.

Die ersten Laschen 13, 14; 15, 16 besitzen im Zentralbereich jeweils eine Bohrung 34, die von Noppen 35 umgeben ist; insgesamt sind bei der Lasche 14 vier Noppen vorgesehen, die, von Zeichenebene aus gesehen, nach unten aus der Lasche 14, ebenso wie aus der Lasche 13 bzw. 15 und 16 herausgedrückt sind. Die zweiten Laschen 17 und 18 besitzen lediglich Durchgangsbohrungen 36.

Zur Herstellung eines Profils werden die Laschen 13, 14; 15, 16; 17, 18 aus der Zeichenebene senkrecht nach oben hochgebogen; weiterhin wird der Basisabschnitt 10 B entlang der strichpunktiert gezeichneten Linien 37 und 38 abgekantet, so daß die hochgebogenen Laschen 13, 14; 15, 16 jeweils die benachbarte Hälfte der Laschen 17, 18 überdecken, wobei wegen der Noppen 35 sich die Laschen 13, 14; 15, 16 außerhalb der hochgebogenen Laschen 17, 18 befinden. Weiterhin ist zur Fertigstellung des Profils der Basisabschnitt 10 B an der ebenfalls strichpunktiert gezeichneten Linie 39 um neunzig Grad zu dem zwischen den Linien 39 und 37 befindlichen Abschnitt abgekantet, so daß der zwischen der strichpunktierten Linie 39 und der Längskante 23 befindliche Abschnitt parallel zu dem Basisabschnitt 10 B verläuft.

Nachzutragen ist, daß vor dem Abkanten entlang der Linie 38 alle Abkantvorgänge an den Basisabschnitten 10 und 10A abgeschlossen sein können; danach werden die Stege 32 abgebrochen und das Abkanten entlang der Linie 38 vorgenommen.

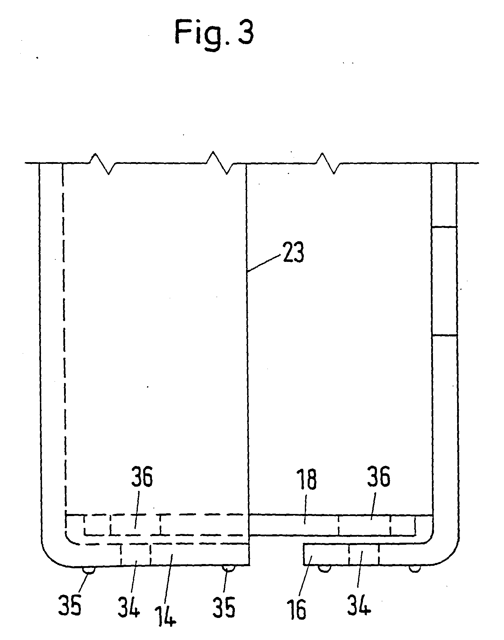

Die Fig. 3 zeigt eine Aufsicht auf das Profil mit den nach innen abgekanteten Laschen 14, 16; weiterhin ist die Längskante 23 zu erkennen, die die Lasche 18 teilweise abdeckt. Die Bohrungen 34 und 36 fluchten im montierten und abgekanteten Zustand; die Noppen 35 überragen die Außenfläche 14, 16. Dabei befinden sich die ersten Laschen 13, 14; 15, 16 außerhalb der zweiten Laschen 17 und 18.

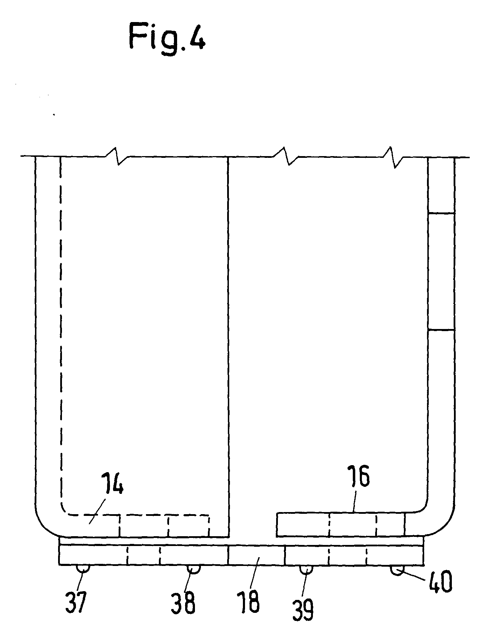

Bei der Ausgestaltung nach Fig. 4 sind die Laschen 13 bis 18 so abgekantet, daß sich die zweiten Laschen 17, 18 außerhalb der ersten Laschen 13 bis 16 befinden. Hierdurch wird die Stabilität des Profiles besser. Den Noppen 35 der ersten Laschen 13 bis 16 entsprechen Noppen 37 bis 40 an den zweiten Laschen 17, 18 , die in gleicher Weise wie die Noppen 35 zum Verdrehschutz für ein daran angeschlossenes weiteres Profil dienen. Ggf. können die ersten und zweiten Laschen 13 bis 18 miteinander verbunden sein.

## Patentansprüche

1. Aus Metall hergestelltes kastenartiges Profil, welches mit weiteren Profilen zu einem Schrank, insbesondere zu einem Schaltschrank ergänzbar ist, dadurch gekennzeichnet, daß ein langgestreckt rechteckiger Basisabschnitt (10 B) vorgesehen ist, an dessen beiden Schmalkanten in entgegengesetzter Richtung je drei Laschen (13, 17, 15; 14, 18, 16) angeformt sind, die durch je einen Schlitz (19, 21; 20, 22) voneinander getrennt sind, daß die Breite der beiden äußeren, ersten Laschen (13, 14; 15, 16) jeweils halb so groß ist wie die der zweiten, inneren Lasche, wobei jede erste im Umfang ein Quadrat bildet, daß der Abstand der beiden entgegengesetzt vorspringenden ersten Laschen (13, 14) von der benachbarten Längskante (23) etwa der Breite der ersten Lasche (13, 14) entspricht, daß zur Bildung des Profils die Laschen (13 bis 18) senkrecht zum Basisabschnitt (10 B) hochgebogen sind, daß der Basisabschnitt in der durch miteinander fluchtende Schlitze (19, 21; 20, 22) definierten Linie (37, 30) je um neunzig Grad abgekantet ist, daß der zwischen der freien Kante der ersten Laschen (13, 14) und der Längskante (23) und außerhalb des Laschenbereichs befindliche Basisabschnittsbereich parallel zum Basisabschnitt gebogen ist, und daß sich die ersten und zweiten Laschen überdecken.

2. Profil nach Anspruch 1 dadurch gekennzeichnet, daß zwei Basisabschnitte (10, 10 A) nebeneinanderliegend gestanzt und mittels abbrechbarer Stege (32, 33) miteinander verbunden sind.

3. Profil nach einem der vorigen Ansprüche, dadurch gekennzeichnet, daß die ersten Laschen (13, 14; 15, 16) jeweils eine Zentralbohrung aufweisen, daß die zweiten Laschen (17, 18) zwei nebeneinander liegende Bohrungen (36) besitzen und daß nach Hochbiegen der Laschen und Abkanten die Bohrungen (34; 36) miteinander fluchten.

4. Profil nach Anspruch 3, dadurch gekennzeichnet, daß auf der Außenseite, betrachtet nach Fertigstellung des Profils, Noppen an den ersten Laschen, (13, 14; 15, 16) bzw. an der zweiten Lasche (18) angeformt sind, die in entsprechende Ausnehmungen an einem anzuschließenden Profil zum Verdrehungsschutz vorgesehen sind.

5. Verfahren zur Herstellung eines Profils nach einem der vorigen Ansprüche, dadurch gekennzeichnet, daß zunächst zwei Basisabschnitte (10, 10 A) aus einer Blechplatte ausgestanzt werden, wobei die Basisabschnitte (10, 10A) mittels Stegen (32, 33) miteinander verbunden sind, daß die Laschen (13 bis 18) senkrecht zum Basisabschnitt (10) hochgebogen werden, daß dann der Basisabschnitt (10) entlang einer durch die Schlitze (19, 21) zwischen den jeweils äußeren ersten Laschen (13. 14) der beiden Basisabschnitte (10, 10 A) verlaufenden Linie (37) abgekantet wird, dergestalt, daß sich die ersten Laschen (13, 14) mit den zweiten Laschen (17, 18) überlappen, daß danach der Teilabschnitt zwischen den freien Kanten der ersten Laschen (13, 14) und der einen benachbarten Längskante entlang der durch die freien Kanten (26, 27) der Laschen (13, 14) definierten Linie (39) parallel zum Basisabschnitt (10, 10 A) umgebogen wird, daß danach die beiden Abschnitte (10, 10 A) durch Abbrechen der Stege (32, 33) voneinander getrennt werden und daß der zwischen den Schlitzen (20, 22) und der Kante, an der die Stege (32; 33) liegen, befindliche Bereich entlang einer Linie, die durch die beiden Schlitze (20, 22) definiert ist, abgekantet wird, so daß die ersten Laschen (15, 16) die zweiten Laschen (17, 18) überdecken und mit dem schon abgekantenten ersten Laschen (13, 14) in einer Ebene liegen und aufeinander zugerichtet sind.
